(19) Europäisches Patentamt
European Patent Office
Office européen des brevets

(11) **EP 2 706 227 A2**

(12) **EUROPÄISCHE PATENTANMELDUNG**

(43) Veröffentlichungstag:
**12.03.2014 Patentblatt 2014/11**

(51) Int Cl.:
*F03D 1/04* (2006.01)  *F03D 3/04* (2006.01)

(21) Anmeldenummer: **13003288.1**

(22) Anmeldetag: **28.06.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **07.09.2012 DE 102012017706**

(71) Anmelder: **IMO Holding GmbH**
**91350 Gremsdorf (DE)**

(72) Erfinder: **Dietz, Volker**
**91315 Höchstadt (DE)**

(74) Vertreter: **Küchler, Stefan**
**Patentanwalt**
**Färberstrasse 20**
**90402 Nürnberg (DE)**

(54) **Strömungskraftwerk zur Nutzung eines Aufwindes**

(57)     Die vorliegende Erfindung richtet sich auf ein Kraftwerk zur Erzeugung von elektrischer Energie aus der Energie eines strömenden Mediums, umfassend ein vertikales, turmartiges Bauwerk mit einer von unten nach oben durchgehenden Röhre, deren Mantel zwischen wenigstens einer unterseitigen Einlassöffnung und wenigstens einer oberseitigen Auslassöffnung geschlossenen ist, worin ein gasförmiges Medium, insbesondere Luft, in etwa vertikaler Richtung strömt und dabei einen oder mehrere, innerhalb der Röhre angeordnete Rotoren antreibt, so dass am Ausgang wenigstens eines daran gekoppelten Generators ein elektrischer Strom abgegriffen werden kann, wobei am bodenseitigen Ende des turmartigen Bauwerks kein vorgelagertes Treibhaus zur Erwärmung der Luft vorgesehen ist, sondern dass sich oberhalb der unterseitigen Einlassöffnungen unmittelbar das turmartige Bauwerk erhebt mit einer Steigung seiner Wand in dem Bereich oberhalb der Einlassöffnungen von 45° oder mehr, vorzugsweise von 60° oder mehr, insbesondere von 75° oder mehr.

Fig.2

EP 2 706 227 A2

**Beschreibung**

Die Erfindung betrifft ein Kraftwerk zur Erzeugung von elektrischer Energie aus der Energie eines strömenden Mediums gemäß dem Oberbegriff des Hauptanspruchs.

In einem Aufwindkraftwerk, welches vereinzelt auch "Thermikkraftwerk" (oder engl.: SCPP für "Solar Chimney Power Plant") genannt wird, wird Luft von der Sonne erwärmt und steigt in einem Kamin auf. Eine oder mehrere Turbinen erzeugen aus dieser Luftströmung elektrischen Strom. Die Funktionsweise ist verhältnismäßig trivial: Die Sonne scheint durch ein großes Dach aus Glas oder lichtdurchlässigem Kunststoff (Kollektor) und heizt den Boden und die Luft darunter auf. Durch die Abdeckung des Bodens mittels des Dachs wird die warme Luft in Bodennähe gehalten, ohne dass jene nach oben aufsteigen kann. Die warme Luft strömt jedoch zu einem Kamin in der Mitte der Anlage, welcher die Einzige großflächige "Verbindungsstelle" zwischen dem Boden und den darüber liegenden Luftschichten darstellt. Es entsteht ein Aufwind (Thermik), der mit Hilfe von Turbinen in elektrischen Strom umgewandelt wird.

Um ein solches Aufwind- oder Thermikkraftwerk zu realisieren, werden jedoch sehr große Kollektorflächen am Grund und Boden rund um den Kraftwerksturm benötigt. Ein Aufwind- oder Thermikkraftwerk ist also sehr flächenintensiv- und somit auch kostenintensiv in Ankauf, Wartung und Pflege dieser Kollektorflächen. Darüber hinaus ist ein solches Aufwind- oder Thermikkraftwerk überwiegend in solchen Gegenden realisierbar, in denen überdurchschnittlich hohe Sonneneinstrahlung gegeben ist. Aufgrund des hohen Platzbedarfs eines Aufwind- oder Thermikkraftwerk ist dies insbesondere in trockenen Gegenden und/oder Wüstengebieten oder wüstenähnlichen Gebieten gegeben. Aufwind- oder Thermikkraftwerke sind also grundsätzlich nicht universell in allen Breitengraden der Erde mit hohem Wirkungsgrad einsetzbar. Dies stellt einen großen Nachteil dar.

Ein solches Aufwindkraftwerk ist beispielsweise der DE 41 14 501 A1 zu entnehmen. Dort wird versucht, den riesigen Flächenbedarf für das vorgelagerte Treibhaus einer zusätzlichen Nutzung zuzuführen, indem oberhalb eines etwa ebenen Daches des Kraftwerks zusätzlich Windräder installiert werden. Aufgrund der riesigen Fläche handelt es sich hierbei jedoch nicht um einige wenige Windräder, sondern um einen ganzen Windpark. Es ist einleuchtend, dass bei einer derartig extensiven Zusatz-Installation die Kosten für eine solche Anlage in das schier Unermessliche steigen.

Aus diesen Nachteilen des beschriebenen Standes der Technik resultiert das die Erfindung initiierende Problem, bei einem gattungsgemäßen Kraftwerk Sorge dafür zu treffen, dass die Investitionskosten minimiert werden.

Die Lösung dieses Problems gelingt bei einem gattungsgemäßen Kraftwerk durch die kennzeichnenden Merkmale des Hauptanspruchs.

Indem somit am äußeren Umfang der gesamten Anlage - also dort, wo sich die bodenseitigen Lufteinlässe befinden - sogleich das turmartige Bauwerk aufsetzt und sich von dort aus in überwiegend vertikaler Richtung nach oben erstreckt, ergibt sich eine Anordnung des Turmbauwerks mit einem im Verhältnis zum Flächenbedarf der Gesamtanlage großen Durchmesser. Daraus resultiert ein großer Umfang U, entsprechend der Formel U = π * d, wobei d der Durchmesser des Turmbauwerks an dessen unterem Ende ist. Wenn der Turm sich mit zylindrischer Gestalt bis zu einer Höhe h erhebt, so ist seine Mantelfläche M = U * h = π * d * h. Davon ist die Hälfte der Sonnenstrahlung ausgesetzt, also eine Fläche F = M / 2 = π * d * h / 2 = π * r * h. Auf einer solchen großen Fläche kann eine erhebliche Menge an Sonnenstrahlung aufgefangen werden. Durch eine gezielte Zuleitung der solchermaßen einfallenden Sonnenstrahlung zu dem unteren Ende des Turmbauwerks bzw. einer darin angeordneten Röhre werden vorgelagerte Treibhäuser entbehrlich - der von dem Kraftwerk benötigte Grund sinkt signifikant, wodurch sich die Investitionskosten für ein derartiges Kraftwerk reduzieren.

Die erfindungsgemäße Röhre ist als Strömungskanal zu verstehen, der eine von unten nach oben gerichtete Strömung ermöglicht. Die Intensität der im Inneren der Röhre herrschenden Strömung ist dabei abhängig von den herrschenden Druckunterschieden zwischen unterem Röhrenende und oberem Röhrenende.

Am oberen Röhrenende weist die dortige Außenluft im Allgemeinen eine höhere Windgeschwindigkeit auf als am unteren Röhrenende. Dadurch wird am oberen Röhrenende ein Unterdruck gegenüber dem Luftdruck am unteren Röhrenende erzeugt. Dieser Unterdruck saugt am oberen Ende der Röhre die Luft aus dem Röhreninneren in Richtung Außenluft bzw. in Richtung Umgebung ab; ein ähnliches Prinzip bewirkt den "Zug" eines Kamins, der bekanntlich auch ohne Anschürens des Kamins zu einer entsprechenden Luftströmung führt.

Der bei der vorliegenden Erfindung jeweils an oberem und unterem Röhrenende bei einer bestimmten, dort herrschenden Strömungsgeschwindigkeit sich einstellende Luftdruck genügt in stark vereinfachter Näherung einschlägigen Berechnungen entsprechend der Bernoullischen Gesetzen sowie der Kontinuitätsgleichung.

Je höher die Röhre bzw. das turmartige Bauwerk ist, um so wahrscheinlicher ergeben sich naturgegebene Druckunterschiede zwischen der Außenluft am unteren Röhrenende und Außenluft am oberen Röhrenende; folglich ist die oben beschriebene Sogwirkung am ausgeprägtesten.

Daher empfiehlt sich ein möglichst hohes, turmartiges Bauwerk mit einer Höhe von beispielsweise 10 bis 300 m; der Durchmesser sollte geringer sein, beispielsweise nur 1 bis 30 m betragen. Damit ergibt sich ein bevorzugtes Verhältnis V von Höhe h zu Durchmesser d von V = h/d ≥ 2, beispielsweise V = h/d ≥ 2, bevorzugt

$V = h/d \geq 4$, vorzugsweise $V = h/d \geq 6$, insbesondere $V = h/d \geq 8$, oder gar $V = h/d \geq 10$.

Der Durchmessers d bezeichnet dabei jenen Durchmesser des Hohlkörpers bzw. des Turm oder der Röhre an seiner engsten Stelle, derer es entlang der Röhre bzw. entlang des Turmes auch mehrere geben kann, also an jenen Stellen an welchen die zu erwartende Strömungsgeschwindigkeit v am höchsten ist bzw. an denen die Querschnittsverkleinerungen der Röhre am ausgeprägtesten sind.

In einer extrem dimensionierten Ausführungsform der Erfindung könnte die Länge der erfindungsgemäßen Röhre eventuell mehr als 800 bis 1.200 Metern betragen, während der Durchmesser gleichzeitig mehr als 100 bis 200 Metern betragen kann.

Die Intensität des soeben beschriebenen Effektes bzw. der damit verbundenen Sogwirkung wird im Sinne der Erfindung verstärkt durch die Erzeugung einer weiteren Strömungskraft, welche sich zu der soeben beschriebenen Sogkraft addiert und diese Sogwirkung somit erhöht. Die Verstärkung dieser Sogwirkung erfolgt mittels einer oder mehrere Wärmequellen im unteren Bereich des turmartigen Bauwerks bzw. der Röhre. Die davon erwärmte Luft dehnt sich aus und hat demzufolge bei gleichem Druck eine geringere Dichte als die Umgebungsluft, wird also leichter und steigt nach oben. Diese zusätzliche Konvektionsströmung überlagert die Sogströmung, und beide gemeinsam können an dem selben Rotor in elektrische Energie umgewandelt werden. Dieses Prinzip entspricht dem allseits bekannten Grundsatz, wonach bspw. warme Luft infolge der geringeren Dichte stets nach oben steigt.

Die resultierende, gesamte Sogwirkung kann als Druckunterschied $\Delta p$ betrachtet werden, welcher eine nach oben gerichtete Luftströmung s antreibt. Diese wiederum übt auf einen innerhalb der Röhre angeordneten Rotor eine nach oben gerichtete Summenkraft aus, wird von diesem aufgegriffen und in eine Drehbewegung des Rotors umgesetzt, welche ihrerseits dann über einen an den Rotor angekoppelten Generator zur Stromerzeugung verwendet wird.

Die erfindungsgemäße Bauweise erlaubt eine Weiterbildung der Erfindung dahingehend, dass zur Erwärmung der Luft am unteren Ende der Röhre anstelle einer bodenseitigen Treibhausanordnung eine Anordnung vorgesehen ist, um im Bereich des Außenmantels des turmartigen Bauwerks vorhandene Energie, vorzugsweise Wärmeenergie, insbesondere aus der Sonneneinstrahlung, aufzufangen und in die Röhre hinein zu leiten, insbesondere zu deren unterem Ende, um dort die Wärme an das gasförmige Medium, insbesondere an die dortige Luft, abzugeben.

Der beispielsweise geschlossene Mantel der Röhre oder des turmartigen Bauwerks kann an seiner Außenseite teilweise, ringförmig oder vollständig mit Photovoltaikzellen oder -modulen und/oder mit Solarmodulen oder -kollektoren belegt sein, um den eingangs beschriebenen Nachteil aufzuheben, dass weitere Energieressourcen benötigt werden, welche den Betrieb des Energieröhrenkraftwerks als Energiewandler oder Energiequelle aufrecht erhalten. Die Ausbeute dieser energiewandelnden Elemente können im Sinne der Erfindung dazu hergenommen werden, die Sogwirkung im Inneren der Röhre oder des Kamins zu verstärken, etwa durch Weiterleitung des aus der Sonnenenergie gewandelten Stromes an die oben beschriebenen Heizelemente.

Im Rahmen der Erfindung wird die Verwendung von beispielsweise nichtmassiven Solar- oder Photovoltaikmodulen bzw. Solar- oder Photovoltaikzellen, wie etwa die Verwendung von Solar(modul)folien-Elementen beschrieben. Derartige Solar(modul)folien werden vorteilhafterweise an die strukturelle Ständerkonstruktion oder an das den Turmes oder die Röhre definierende Fachwerk aus miteinander verschraubten Metallelementen an- oder aufgebracht. Vorzugsweise wird mit diesen Solar(modul)folien-Elementen die Mantelfläche der Röhre bzw. des Turms großflächig umspannt oder überspannt, beispielsweise so, dass wenigstens die Hälfte der gesamten Mantelfläche $M_r$ bzw. $M_k$ der Turmhaut der Röhre oder des Turms mit Solar(modul)folien-Elementen umspannt oder überspannt ist, vorzugsweise jedoch mindestens zwei Drittel gesamten Mantelfläche $M_r$ bzw. $M_k$. Im Idealfalle ist die mittels Solar(modul)folien-Elementen, oder gar mit Solarmodulen oder Solarzellen oder Photovoltaikelementen überspannte Fläche der Röhre oder des Turms nahezu ähnlich groß wie der Betrag der Mantelfläche $M_r$ bzw. $M_k$.

Bei der Verwendung von Solar- oder Photovoltaikzellen im Sinne der Solarwärmetechnik zum Betrieb von Wärmepumpen wird vorzugsweise Energie aus der absorbierten Sonneneinstrahlung als "Abwärme" oder "Restwärme" ins Innere des Turmes oder der Röhre abgeführt, um damit eine oder mehrere Einrichtungen im Inneren des Energieröhrenkraftwerks zu beheizen. Diese Einrichtungen sind dabei vorteilhafterweise die oben genannten Heizelemente oder Heizquellen. - welche in dieser weiteren Ausgestaltung der Erfindung eben nicht bestromt werden, sondern über Medienbeheizung infolge Solarwärmetechnik betrieben werden.

In einer möglichen Ausgestaltungsform ist die Röhre oder der Kamin bzw. Turm, welcher in erster Näherung stets einem Hohlkörper gleichkommt, etwa oder näherungsweise zylinderförmig ausgestaltet. In einer alternativen Ausgestaltungsform ist die Röhre oder der Kamin etwa pyramiden-, pyramidenstumpf-, oder gar kegel-, oder sogar kegelstumpf-förmig ausgestaltet, d.h. mit stets größerer Querschnittsfläche am unteren Röhrenende als am oberen Röhrenende.

Eine beispielsweise 20 Meter im Durchmesser d aufweisende gerade, zylindrische Röhre mit einer Höhe h von 100 Meter hat eine Mantelfläche von etwa 6.280 $m^2$. Die jeweils der Sonne ausgesetzte, seitliche bzw. horizontale Projektionsfläche F des Turms ist $F = d * h$, in diesem Falle also $F = 2.000 \ m^2$.

Im Idealfall beträgt die Neigung der Mittenachse der Röhre gegenüber dem Boden oder dem darunter liegenden Fundament 90°, ist also senkrecht bzw. lotrecht darauf errichtet. Aufgrund der Neigung der Ekliptik liegt der mittlere Sonnenstand zur Zeit der Tag-und-Nacht-Gleiche in unseren Breiten etwa bei einer Größenordnung von 30°, gemessen als Höhenwinkel $\alpha$.

Daher wird die mittlere, von der Sonne beschiene Fläche tatsächlich weiter reduziert auf $F_t = F * \cos \alpha$, im vorliegenden Beispiel also $F_t \approx 2.000 \, m^2 * \cos 30° = 2.000 \, m^2 * \frac{1}{2} \sqrt{3} \approx 1.730 \, m^2$.

Die Strahlung der Sonne trifft durchschnittlich mit einer mittleren Intensität $I_m$ von etwa 1.340 W/m² auf die Erde.

Verwendet man Photovoltaik-Zellen, so lässt sich daraus bei einem Wirkungsgrad $\mu$ von beispielsweise 10 % eine Leistung P von etwa $F_t * I_m * \mu$ erzeugen, also im vorliegenden Beispiel etwa P = 1.730 m² * 1.340 W/m² * 0,1 = 231,82 kW ≈ 0,23 MW. Hierbei handelt es sich allerdings nur um die reine Solarkraft. Die Strömung im Inneren der Röhre wird aber zusätzlich noch von der Windkraft getrieben, so dass die Strömungsleistung $P_S$ größer sein wird, beispielsweise 0,3 bis 0,5 MW beträgt.

Nimmt man ferner an, dass der Rotor im Inneren der Röhre einen Wirkungsgrad $\mu_R$ von etwa 50 % aufweist, und der Wirkungsgrad $\mu_G$ des Generators bei etwa 80 %, so lässt sich mit einem derartigen Kraftwerk eine mittlere elektrische Leistung $P_{el.}$ von etwa $P_{el.} = P_S * \mu_R * \mu_G \approx 0,4 \, MW * 0,5 * 0,8 = 0,16 \, MW$ erzeugen.

Wird demnach davon ausgegangen, dass nach aktuellem Stand der Technik, welcher mono- oder polykristalline (PV-) Zellen oder Module vorsieht, und nach geographischer Lage sowie Ausrichtung dieser Zellen oder Module in Azimut mit Blickrichtung zur Sonne zwischen etwa 0,05 kWp und 0,15 kWp installierter Leistung pro Quadratmeter Modulfläche aus der Sonnenstrahlung gewinnbar sind, so ist bei der oben beispielhaft beschriebenen 100 Meter langen erfindungsgemäßen Röhre mit einer Mantelfläche von etwa 6.280 Quadratmetern eine gewinnbare elektrische Energie von etwa zwischen 300 Tausend kWh bis zu 700 Tausend kWh in gemäßigten klimatischen Verhältnissen pro Jahr möglich. Dies entspricht einer gewinnbaren elektrischen Energie von durchschnittlich zwischen etwa 800 kWh bis zu etwa 1.900 kWh pro Tag, wobei die mittlere Anzahl der Sonnenscheinstunden berücksichtigt ist. Diese elektrische Energie kann beispielsweise zur Bestromung der Heizquelle(n) im Inneren der Röhre verwendet werden, welche wiederum die Strömung infolge des Kamineffektes unterstützt oder verstärkt.

Ganz anders sähe die Energieausbeute dagegen aus, falls man solare Wärmekollektoren anstelle von Photovoltaikmodulen verwendet, weil deren Wirkungsgrad $\mu_W$ etwa zwischen 60 % und 75 % liegt. Damit ergäbe sich eine Leistung von bis zu P = 1.730 m² * 1.340 W/m² * 0,75 = 1.738,65 kW ≈ 1,74 MW. Zusammen mit der Windenergie läge die Strömungsleistung $P_S$ darüber, beispielsweise bei 1,8 bis 2,0 MW. Nter den obigen Annahmen ließe sich daraus eine mittlere elektrische Leistung $P_{el.}$ von etwa $P_{el.} = P_S * \mu_R * \mu_G \approx 1,9 \, MW * 0,5 * 0,8 = 0,76 \, MW$ erzeugen.

Damit läge die erzielbar Leistung etwa in der Größenordnung einer aktuellen Windkraftanlage; allerdings mit den Vorteilen, dass die Energie vom Wind relativ unabhängig ist, und dass beispielsweise der im Inneren angeordnete Rotor nur einer relativ konstanten Luftströmung ausgesetzt ist, ohne Böen od. dgl.; auch wird die Belastung der Rotorlager durch die der Gewichtskraft entgegen wirkende Auftriebskraft weiter reduziert, so dass eine solche Anlage über einen sehr großen Betriebszeitraum hinweg sowie relativ wartungsfrei betrieben werden kann.

In einer weiteren alternativen Ausgestaltungsform weist die röhren-, kamin-, oder turmartige Silhouette vereinzelte Querschnittsaufweitungen und/oder Querschnittsverbreiterungen auf, beispielsweise am oberen und/oder unteren Ende. Diese Querschnittsaufweitungen können der Röhre bzw. dem Turm beispielsweise die Form einer stilisierten Sanduhr geben. Die Silhouette oder Kontur dieser Röhre kann aber auch eine oder mehrere, beispielsweise vereinzelte, Querschnittsverengungen aufweisen, etwa in ihrer Mitte oder in ihrem oberen Drittel. Die Vorteile von Stellen mit Querschnittsaufweitungen der Röhre liegen in dem dadurch bedingten erhöhten Platzangebot zur Installation von Gerätschaften oder Komponenten, insbesondere von Rotoren, in der Röhre, eben an jenen querschnittsverbreiterten Stellen. Die Vorteile von Stellen mit Querschnittsverengungen hingegen liegen in der Strömungslehre, insbesondere in der Kontinuitätsgleichung, begründet: In solchen Bereichen einer durchströmten Röhre, an welchen der Strömungsquerschnitt $A_i$ verengt wird, nimmt gemäß der Gleichung

$$A_i * v_i = const.$$

die Strömungsgeschwindigkeit $v_i$ des durchströmenden Mediums zu. Durch entsprechende Dimensionierung des jeweiligen Strömungsquerschnitts der Röhre bereits in der Anlagenplanung bzw. bei der Planung der Röhrendimensionen lässt sich also die jeweilig gewünschte "Soll-Strömungsgeschwindigkeit" vordefinieren bzw. (ungefähr) im Bereich eines Rotors voreinstellen.

Der Wirkungsgrad einer derartigen Anlage lässt sich weiter verbessern, wenn im Bereich unterseitiger Einlassöffnungen ein oder mehrere Körper als Wärmefallen ausgelegt sind, welche sich durch Sonnenstrahlung erwärmen und diese Wärme an durch die Einlassöffnungen strömende Luft abgeben.

Ferner könnten die Außenwand des turmartigen Bauwerks und/oder dessen Boden und/oder ein oder mehrere Körper im Bereich unterseitiger Einlassöffnungen mit einer dunklen, vorzugsweise schwarzen Farbe versehen sein, so dass durch eine minimale Rückstrahlung ein maximaler Anteil der aufgefangenen Strahlungsleistung in Wärme umgewandelt wird.

Insbesondere im unteren Bereich des turmartigen Bauwerks könnten metallische Wärmeleiter vorgesehen sein, welche das Turmbauwerk von außen bis innen durchsetzen, um die an der Außenseite des turmartigen Bauwerks aufgefangene Wärmeenergie in das Innere des turmartigen Bauwerks hinein zu leiten.

Ferner können ein oder mehrere Kreisläufe für ein Fluid vorgesehen sein, um die an der Außenseite des turmartigen Bauwerks aufgefangene Wärmeenergie über das zirkulierende Fluid in das Innere des turmartigen Bauwerks hinein zu leiten.

In einen oder mehrere solche Kreisläufe für ein Fluid könnte je eine Wärmepumpe eingeschalten sein, um einen möglichst großen Anteil der an der Außenseite des turmartigen Bauwerks aufgefangenen Wärmeenergie im Inneren der Röhre des turmartigen Bauwerks abzugeben.

Darüber hinaus wäre es denkbar, den Innenraum des turmartigen Bauwerks, insbesondere die dortige Röhre, zu verspiegeln. Solchenfalls besteht die Möglichkeit, in der Mantelfläche des turmartigen Bauwerks, insbesondere in der dortigen Röhre, verglaste Fenster vorzusehen, so dass die einfallende Sonnenstrahlung in das turmartige Bauwerk gelangen kann. Sofern diese Fenster als halbdurchlässige Spiegel ausgebildet sind, welche einen Lichteinfall zulassen, jedoch kein Licht nach außen entweichen lassen, kann damit ähnlich wie bei einem Lichtleiter das einfallende Licht nach unten zum Sockel der Röhre weitergeleitet werden. Unmittelbar unterhalb einer vorzugsweise dunklen, insbesondere schwarzen Bodenplatte ließe sich ein Wärmespeicher anordnen, vorzugsweise in Form eines Wasserbehälters, dessen Inhalt von einfallendem Licht aufgeheizt wird. Ein solcher Wärmespeicherbehälter und/oder der Außenmantel des turmartigen Bauwerks könnte thermisch isoliert sein.

Ferner könnten im Bereich oberseitiger Auslassöffnungen der vertikalen Röhre innerhalb des turmartigen Bauwerks Strömungsleitbleche vorgesehen werden, um den Zug innerhalb der Röhre zu verbessern. Ein solches Strömungsleitblech könnte eine konvex gewölbte Unterseite aufweisen, die sich einer oberseitigen Öffnung der Röhre von oben entgegenwölbt und also den Querschnitt für die dortige, horizontale Windströmung verengt und demzufolge die Strömungsgeschwindigkeit des Windes dort erhöht, um durch einen daraus resultierenden, vermehrten Unterdruck an der betreffenden, oberseitigen Öffnung den Zug innerhalb der Röhre zu steigern.

Im vorgesehenen Regelfalle handelt es sich bei dem strömenden Medium um ein Gas oder um Luft, beispielsweise möglichst trockene Luft. Andererseits könnte auch ein anderes Fluidmedium verwendet werden, welches beispielsweise im unteren Teil oder im unteren Drittel der Röhre aufbewahrt wird oder beispielsweise durch einen Kanal, Fluss oder Strom dorthin befördert wird, gut geeignet, mittels der oben genannten Heizelemente erwärmt zu werden, sodass dieses verdampft und nach der Verdampfung ein höheres Volumen bei gleichzeitig geringerer Dichte einnimmt.

Der Drehantrieb eines gelagerten Standard-Rotors oder mehrerer gelagerter Standard-Rotoren erfolgt nach dem physikalischen Prinzip des Quer- oder Auftriebs: Das Flügelprofil eines Rotorblattes wird nicht symmetrisch von der in dem in der Röhre strömenden Medium umströmt. Ähnlich dem umströmten Tragflügel von Flugzeugen entsteht dabei ein Quertrieb, welcher in etwa senkrecht zur Rotationsachse des Rotors gerichtet ist. Die Summe der Druckunterschiede aller an einer Nabe befindlichen Rotorblätter wirkt in Richtung der Strömung gemäß Sog- und Kamineffekt und setzt den jeweiligen Standard-Rotor inkl. Nabe und Rotorblättern in Drehbewegung.

Bevorzugt ist der Rotor oder die Turbine bzw. Turbinenanordnung in Form eines ein-oder mehrblättrigen Standard-Rotors ausgebildet: Ein solcher dreiblättriger Standard-Rotor verfügt über eine jeweils zentrale Nabe, an welcher eines oder mehrere Rotorblätter schaftseitig befestigt sind oder befestigt werden können. Gegebenenfalls erfolgt diese Befestigung unter zusätzlicher Einbringung je eines Blattverstellmechanismus pro Rotorblatt. Dadurch kann der Anstellwinkel eines Rotorblattes gemeinsam oder separat einstellbar sein, beispielsweise mittels Verstellgestänge oder gar mittels eines Schwenkgetriebes oder Schwenkantriebs oder Schwenktriebs. Dieser Verstellmechanismus wird in der Regel zwischen Nabe und Blattschaft angebracht und vorzugsweise mittels ringartig umlaufenden oder kranzförmig angebrachten Bohrungen angeschraubt.

Besonders empfehlenswert ist es im Sinne der Erfindung, wenn die Rotationsachse eines Standard-Rotors räumlich nahezu oder exakt so gerichtet ist, wie die Strömungs- oder Kraftrichtung der soeben genannten Sogwirkung gerichtet ist. Bevorzugt ist die Nabe eines jeden solchen Standard-Rotors mit ihrer eigenen Rotationsachse entlang der Senkrechten zum Fundament der Erfindung ausgerichtet. Es ist auch denkbar und im Sinne der Erfindung, wenn mehrere der soeben beschriebenen Standard-Rotoren innerhalb der Röhre angebracht sind, wobei jeder Rotor eine eigene Rotationsachse besitzt und jede dieser Rotationsachsen vorzugsweise nahezu parallel oder sogar exakt parallel zur senkrechten Mittenachse gerichtet ist. Falls andere Rotortypen verwendet werden, beispielsweise Savonius-, Darrieus- oder Flettner- bzw. Magnusrotoren, so können diese im Inneren der Röhre derart angeordnet werden, dass deren Rotationsachse(n) in etwa parallel zur Horizontalen gerichtet sind, also folglich etwa lotrecht zur o.g. senkrechten Mittelachse.

Der oben genannte Mechanismus zur Blattverstellung kann mittels miteinander kämmender, verzahnter Elemente bewerkstelligt werden, gegebenenfalls in Form eines mit einem Rotorblatt gekoppelten Zahnringes, der mit mindestens einem Ritzel kämmt. Jenes Ritzel ist - analog zur obigen Ausführung - mit einem Antrieb an dessen Stirnseite gekoppelt. wodurch das Ritzel in Drehung versetzt wird und infolgedessen die Verstellung des betreffenden Rotorblattes bewirkt.

Die im Inneren der Röhre befindlichen Rotoren sollten reibungsarm gelagert sein, beispielsweise mittels Wälzlagern, vorzugsweise mittels weitestgehend reibungsfreien Lagern im Einsatz, insbesondere mittels berührungslosen Lagern.

In einer weiteren Ausgestaltungsform der Erfindung werden mehrere Rotoren in der Röhre angebracht, und zwar beispielsweise so, dass diese sequentiell und entlang der Sogwirkung durch den Kamineffekt angebracht sind, sozusagen von unten nach oben in Reihe der Strömung geschaltet sind.

Vorzugsweise ist jeder dieser im Inneren der Röhre bzw. des Kamins befindlichen Rotoren separat gelagert, beispielsweise durch eine Drehverbindung, ein Wälzlager, Großwälzlager oder mittels Momentenlager. Als Lager oder Drehverbindung der Erfindung können dabei alle Formen und Bauarten von Drehverbindungen oder Wälzlagern oder Großwälziagern sowie Momentenlagern eingesetzt werden, beispielsweise: Ein- oder mehrreihige Vierpunktlager, Zylinderrollenlager, Kombilager, Kreuzrollenlager, Kegelrollenlager, Drahtlager, aber auch beispielsweise ein- oder mehrreihige Sonderdrehverbindungen, Kugeldrehverbindungen, Rollendrehverbindungen. Kreuzrollendrehverbindungen, Kombidrehverbindungen Rolle/Kugel. Eine weitere Ausgestaltung der Erfindung sieht den Einsatz von Rillenkugellagern, Pendelkugellagern, einfachen oder doppelten Schrägkugellagern, Axialrillenkugellagern, Nadellager und Pendelrollenlager, Tonnenlager vor. Eine solche Lagerung weist stets ein erstes, ringförmiges Anschlusselement auf, welches mit einem oder mit mehreren Rotoren verbunden ist, sowie ein zweites, ringförmiges Anschlusselement, welches mit der Röhre oder dem turmartigen Bauwerk verbunden ist. Diese Verbindungen sind beispielsweise als Schweiß-, Löt-, Niet- oder Schraubverbindung ausgebildet und können demzufolge kraft- und/oder material-und/oder formschlüssig hergestellt sein.

Mit den jeweiligen Lagerringen vorzugsweise kranzförmig verbunden oder in diese jeweiligen Lagerringe integriert ist beispielsweise mindestens ein Spulenring, beispielsweise aufweisend eine oder mehrere Kupferspulenpakete, gegebenenfalls in Ausprägung eines innen liegenden vierpoligen Wechselstromgenerator-Läufers, welcher um seine eigene Antriebsachse dreht. Dieser mindestens eine Spulenring wird während der Drehung des Rotors, normalerweise gleichsinnig, mitbewegt. Vorzugsweise fallen Antriebsachse des Läufers und Rotationsachse des Rotors zusammen und bilden so eine gemeinsame Achse, welche während der Rotationsbewegung mit gleichem Drehsinn und gleicher Rotationsgeschwindigkeit dreht.

Durch die vorteilhafte Verwendung zwischengeschalteter Getriebestufe(n) kann jedoch ermöglicht werden, dass der Spulenring und der mittels Getriebestufe(n) daran gekoppelter Rotor bzw. Turbine mit unterschiedlicher Rotationsgeschwindigkeit drehen.

Mindestens ein zweiter Ring, welcher beispielsweise während der Drehung des Rotors feststeht, da jener mit der Röhren- bzw. Turmkonstruktion oder mit dem Maschinenträger verbunden ist, weist magnetische Eigenschaften oder magnetische Elemente auf, sodass sich ein Magnetfeld ausbildet. Durch die drehende Bewegung des Spulenrings im genannten Magnetfeld, welches entweder durch die magnetischen Elemente erzeugt wird, oder alternativ durch Elektromagnetismus erzeugt werden kann, wird Spannung induziert, welche in geeigneter Form durch Einrichtungen im Inneren der Röhre, beispielsweise angebracht an jedem feststehenden Lagerring oder an dem Maschinenträger, abgegriffen werden kann.

Vorzugsweise eignen sich Schleifringe oder Kommutatoren, welche beispielsweise am Läufer kontaktieren, zum Abgriff der elektrischen Spannung.

Anstatt der magnetischen Elemente kann dieser mindestens zweite Ring, welcher auch als Stator bezeichnet wird, mehrere Induktionsspulenpakete aufweisen, etwa in Ausprägung einer vierpoligen Wechselstromgenerator-Komponente. Beispielsweise kann ein solcher Stator die innenliegende Läuferkomponente umschließen.

Der elektromechanische Statorteil der Generatorbaugruppe ist also vorzugsweise direkt oder indirekt elektrisch verbunden mit mindestens einem elektrischen Wandler oder Umrichter, oder aber direkt oder indirekt elektrisch verbunden mit mindestens einem Akku oder Speicherelement.

Diese vorgenannte Ausprägungsform der zur Erfindung zugehörigen elektrischen Generatorbaugruppe entspricht entweder der des direkt in die Lagerung oder Drehverbindung integrierten elektrischen Generators.

Alternativ entspricht die Ausprägungsform der zur Erfindung zugehörigen elektrischen Generatorbaugruppe eines an die direkt an die gelagerte Welle angeschlossenen oder angeflanschten elektrischen Generators, wobei zwischen der gelagerte Welle und dem elektrischen Generator eine Getriebebaugruppe eingebaut sein kann.

In einer standardgemäßen Ausgestaltung der Erfindung ist jedoch der wenigstens eine Rotor im Inneren der Röhre mit dem Rotorteil eines elektrischen Generators gekoppelt oder koppelbar, beispielsweise über eine Welle-Nabe-Verbindung. Grundsätzlich kann dieser elektrische Generator bzw. diese elektrische Generatorbaugruppe als Wechselstromgenerator ausgeführt sein, alternativ als Drehstrom-Synchrongenerator. Im Falle eines Inselbetrieb der vorliegenden Anlage kann der Generator als selbsterregte Asynchronmaschine ausgeführt sein. Eine Netzkopplung kann gegebenenfalls über Umrichterkopplung oder über direkte Netzkopplung erfolgen.

Im Sinne der Erfindung kann der Statorteil des vorgenannten elektrischen Generators beispielsweise mit dem Fundament oder mit dem Maschinenträger der Anlage oder direkt an der Innenseite der Röhren- oder Turmwandung der vorliegenden Erfindung koppelbar ausgeführt sein, während sich der Rotorteil bzw. Läufer des elektrischen Generators durch die Energie der in Drehung versetzten Rotoren dreht. Die Koppelstelle zwischen jenem Rotorteil des Generators und dem Rotorteil der strömungstechnischen Rotor- bzw. Turbinenanordnung kann jeweils mittels Schraub- oder Niet- oder gar mittels (materialschlüssiger) Schweiß- oder Lötverbindung realisiert werden. Jedenfalls kann diese Koppelstelle mit gängigen Maschinenelementen realisiert werden.

Der Rotor oder die Rotoren im Inneren der Röhre, der/ die infolge der Medienströmung im Inneren der Röhre in drehende Bewegung versetzt werden, können entweder direkt oder indirekt, d.h. über ein Getriebe, mit dem Rotorteil bzw. Läufer des elektrischen. Generators gekoppelt sein.

In der vorteilhaftesten Ausgestaltungsform der Erfindung wird die aus der Medienströmung gewonnene elektrische Energie direkt in ein vor Ort vorhandenes Energienetz eingespeist, oder aber vorteilhafterweise in elektrische Speicherzellen, welche auch als sogenannte "Akkus" oder Akkumulatoren bzw. elektrische Speicherbatterie- bzw. Speicherzellen bezeichnet werden, eingespeist.

In einer Ausführungsform weisen diese Speicherzellen eine elektrische Verbindung zu wenigstens einem Gleichrichter auf, der direkt an die Generatorbaugruppe angeschlossen ist. Damit kann die erzeugte Energie zwischengespeichert werden. Ferner können diese Speicherzellen mit einem elektrischen Wechselrichter gekoppelt sein, um die während der Sonnenscheinstunden aus der Sonnenstrahlung oder bei Wind gewonnene und gespeicherte Energie während sonnenscheinloser und windstiller Zeiträume, etwa während der Nacht oder bei Schlechtwetterlage, einzuspeisen.

Die Erfindung wird vorteilhafterweise ergänzt durch eine Sensorik, welche die strömungstechnischen und klimatischen Verhältnisse sowohl im Inneren des Turms bzw. der Röhre, als auch an dessen unteren und/ oder oberem Ende erfassen und für eine Auswertung bereitstellen oder weiterleiten. Diese Sensorik kann einen oder mehrere Windmesser oder Anemometer umfassen, darüber hinaus auch Temperatursensoren, Hygrometer, Drucksensoren, etc. Im Idealfall sind so viele derartige Sensoren in und/oder an der erfindungsgemäßen Röhre installiert, dass die Strömungs-, Temperatur-, Feuchtigkeits- und/oder Druckverhältnisse an nahezu jedem Punkt im Inneren der Röhre, als auch an den unteren und oberen Öffnungen der Röhre, sensiert und/oder berechnet, ggf. auch rechnergestützt simuliert und/oder extrapoliert werden können. Dazu ist es vorteilhaft, wenn mehrere, vorzugsweise drei bis zehn, Wind- und/oder Strömungs- und/oder Klimasensoren im Inneren der Röhre sowie an den Öffnungen angebracht sind, vorzugsweise an jeder Öffnung zumindest je ein Wind- und/ oder Strömungs- und/oder Klimasensor.

Die Verstärkung der Sogwirkung durch die Konvektionsströmung ist in erster Näherung abhängig von der in den unteren Bereich der Röhre eingebrachten Wärmemenge. Diese kann geregelt werden, d. h. es wird eine angestrebte Medienströmungsgeschwindigkeit als Sollwert vorgegeben, und die von der/den Wärmequelle (n) abzugebenden Wärmemenge ggf. verstellt, um die Ist-Strömungsgeschwindigkeit in der Röhre diesem Sollwert anzupassen. Dadurch wird die Ist-Strömungsgeschwindigkeit während des Betriebes der Anlage möglichst konstant gehalten, insbesondere unabhängig von Umgebungsverhältnissen wie zum Beispiel Wind / Wetter / Klima / Temperatur. Als Reglerstrukturen kommen P-Regler, PI-Regler oder PID-Regler in Betracht sowie auch Zweipunktregler. Das Regelschema sollte derart konzipiert sein, dass bei unter den Sollwert sinkender Ist-Strömungsgeschwindigkeit - ggf. verzögert - die Heizung eingeschaltet oder hochgeregelt wird, bei über den Sollwert steigender Strömungsgeschwindigkeit - ggf. verzögert - die Heizung ausgeschaltet oder abgeregelt wird

Die Erfindung sieht vor, dass auch mehrere solcher Wärmequellen oder Heizelemente, zweckmäßigerweise im unteren Teil des turmartigen Bauwerks bzw. der Röhre, an- oder eingebracht sein können, um bei Bedarf zugeschaltet werden zu können. Heizelemente/Wärmequellen können auch in mittleren oder höheren Ebenen über dem Grund oder Fundament installiert oder angebracht werden, insbesondere innerhalb der Röhre. Als besonders leicht zu regelnde Wärmequellen können in der Praxis elektrische Heizquellen eingesetzt werden. Insbesondere können elektrische Stab-, Ring-, und/oder Flächenheizungen verwendet werden. Alternativ sind auch Abwärme- oder Fernwärme-Heizquellen einsetzbar, sofern die Anbindung der erfindungsgemäßen Anlage an ein Ab- oder Fernwärmenetz besteht.

Die Röhre bzw. das turmartige Bauwerk kann aus ähnlichen Grundwerkstoffen wie heutige Türme von Windkraftwerken oder Kraftwerken fossiler Energieträger (z.B.: Kohlekraftwerke) bestehen, oder aber aus witterungsbeständigen Metallwerkstoffen oder Metallblechen, beispielsweise in Form eines Stahlgerüstes oder Metallfachwerks oder aufgebracht auf ein Holzfachwerk oder Holzständergerüst. Auch Vollstahl- oder Vollmetallkonstruktionen der Röhre bzw. des Kamins sind denkbar und möglich. Auch eine Modulbauweise der Röhre bzw. des Kamins oder des Turmes, ähnlich der Konstruktion moderner Windkraftanlagen, ist denkbar und im Sinne der Erfindung.

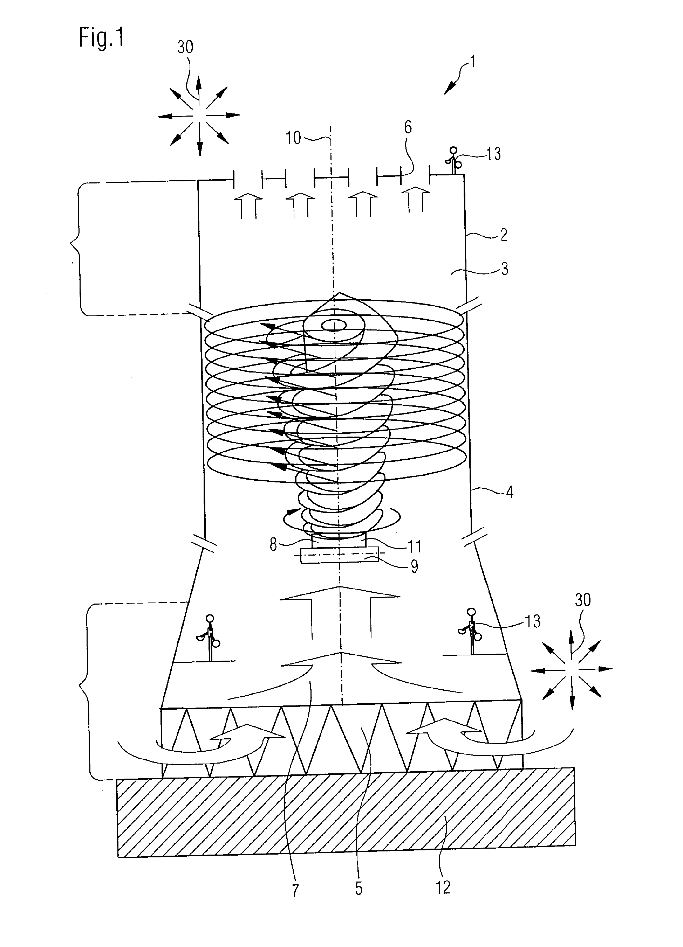

Weitere Merkmale, Eigenschaften, Vorteile und Wirkungen auf der Grundlage der Erfindung ergeben sich aus den folgenden Beschreibungen einer bevorzugten Ausführungsform der Erfindung, sowie weiteren vorteilhaften Ausgestaltungen der Erfindung, sowie anhand der Zeichnungen. Hierbei zeigen die Fig. 1 bis 10 jeweils verschiedene Ausführungsformen eines erfindungsgemäßen Strömungskraftwerks, jeweils in einem schematischen Vertikalschnitt.

Das Strömungsraftwerk 1 gemäß Fig. 1 umfasst einen Turm 2, welcher eine Röhre 3 umschließt. Im Mantel 4 des Turms 2 gibt es mehrere Öffnungen 5, 6, und zwar wenigstens eine Öffnung 5 im unteren Drittel der Röhre 3 und eine Öffnung 6 im oberen Drittel der Röhre 3, so dass das Medium innerhalb der Röhre 3, vorzugsweise Luft, ungehindert zirkulieren bzw. in die Atmosphäre entweichen kann. Infolge eines Sog- und Kamineffektes entsteht innerhalb der Röhre 3 ein Aufwind 7, d.h., das Strömungsmedium, insbesondere Luft, steigt nach oben und treibt dabei einen schnecken- oder schraubenförmigen Rotor 8 an, der mittels einer Lagerbaugruppe 9 um eine senkrechte Mittelachse 10 mit etwa konstanter Geschwindigkeit $v_M$ drehend, gelagert ist. Der Rotor 8 ist dabei über eine mechanische Nabe oder Welle 11 mit der Lagerbaugruppe 9 verbunden. Das Kraftwerk 1 steht senkrecht auf einem Fundament oder auf einem sonstigen, massiven Grund 12. Sensoren 13 im Bereich der Öffnungen 5, 6 dienen der Erfassung oder Berechnung der Strömungsgeschwindigkeit des Mediums.

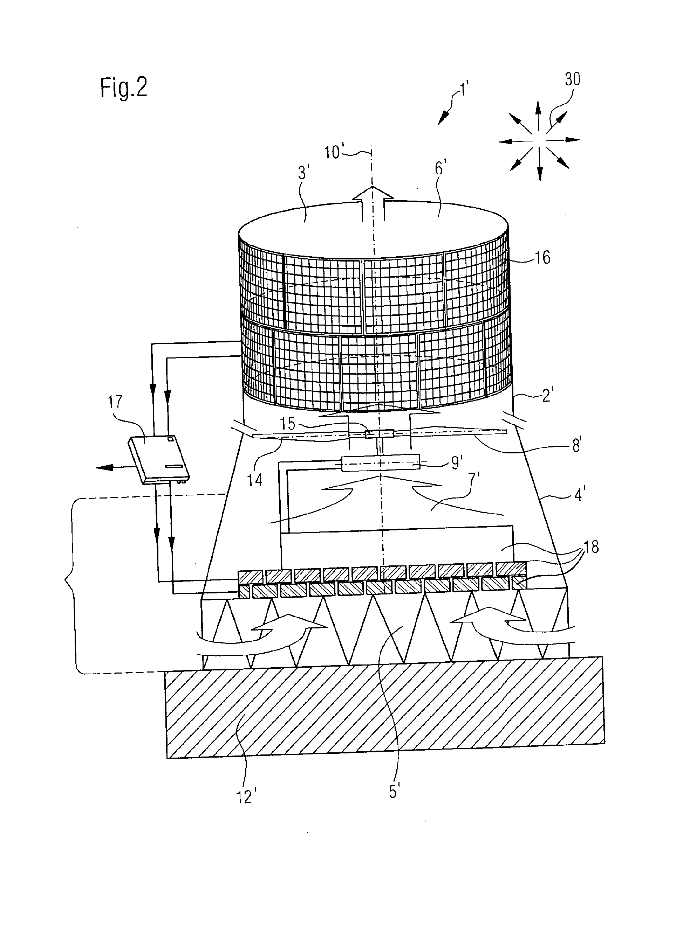

Das Strömungskraftwerk 1' nach Fig. 2 verfügt über einen Standard-Rotor 8' mit zwei oder mehr Rotorblättern 14 und einer Nabe 15 entlang der senkrechten Mittelachse 10'. Ferner sind zu erkennen mehrere den Turmmantel 4' umspannende Solarzellen 16, welche einen elektrischen Wandler oder Umrichter 17 mit Energie versorgen, beispielsweise zur Bestromung mehrerer Heizvorrichtungen 18 im unteren Drittel der Röhre 3' bzw. des Turms 2'. Durch die Medienströmung 7' im Inneren der Röhre 3' wird die Lagerbaugruppe 9' während ihres drehenden Betriebes gekühlt. Durch geeignete Beschaltung einer separaten Heizvorrichtung 18 kann die Lagerbaugruppe 9' während des Betriebes auch beheizt werden, beispielsweise bei Einsatz des Kraftwerks 1 in kalten oder frostigen Regionen. Das Kraftwerk 1' steht senkrecht auf einem Fundament oder einem massiven Grund 12' oder auf einer Anlagen-Plattform.

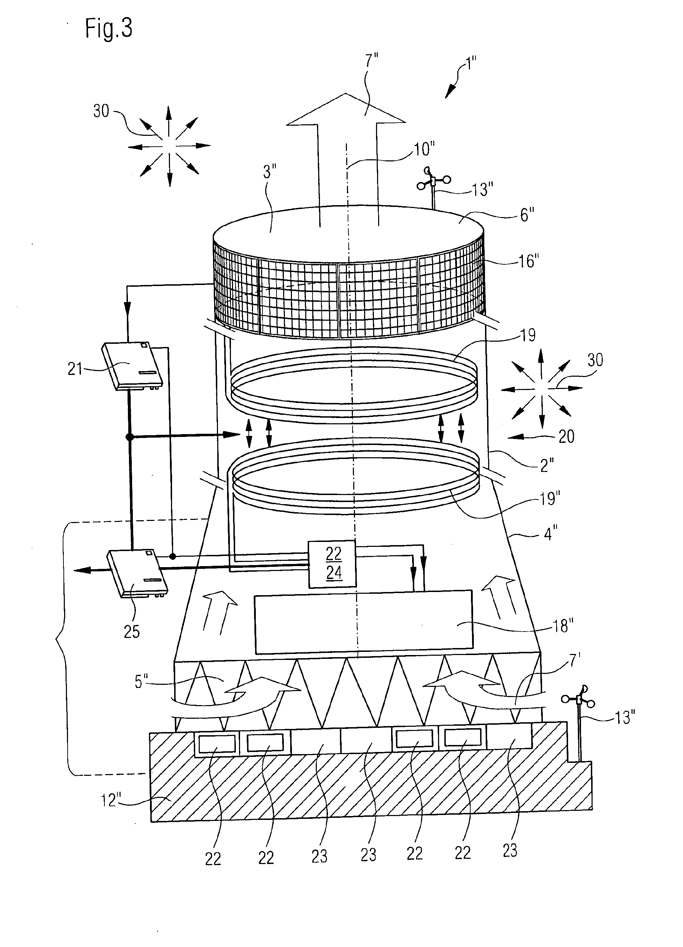

Bei dem Kraftwerk 1" nach Fig. 3 sind mehrere Spulenelemente 19 als Komponenten eines integrierten elektrischen Generators 20 vorgesehen, wobei ein Spulenelement 19 über einen elektrischen Wandler 21 mit elektrischer Energie versorgt wird zur Bereitstellung eines elektromagnetischen Feldes. Ferner dargestellt sind mehrere Akkus oder Speicherzellen 22, bevorzugt untergebracht in Reservebereichen 23 im Fundament 12", und/oder zusammen mit einem elektrischen Wandler 24 in ein- und demselben Gehäuse untergebracht. Der letztgenannte Wandler 24 kann eine großflächige Heizvorrichtung 18" bestromen. Ferner sind mehrere den Turmmantel 4" umspannende Solarfolien-Elemente 16" zu sehen, sowie ein Wandler 25 für die Netzeinspeisung, der mit Speicherzellen 22 als auch mit elektrischen Wandlern oder Umrichtern 17", 24 elektrisch gekoppelt ist. Das Kraftwerk 1" steht senkrecht auf einem Boden-Fundament oder auf massivem Grund 12".

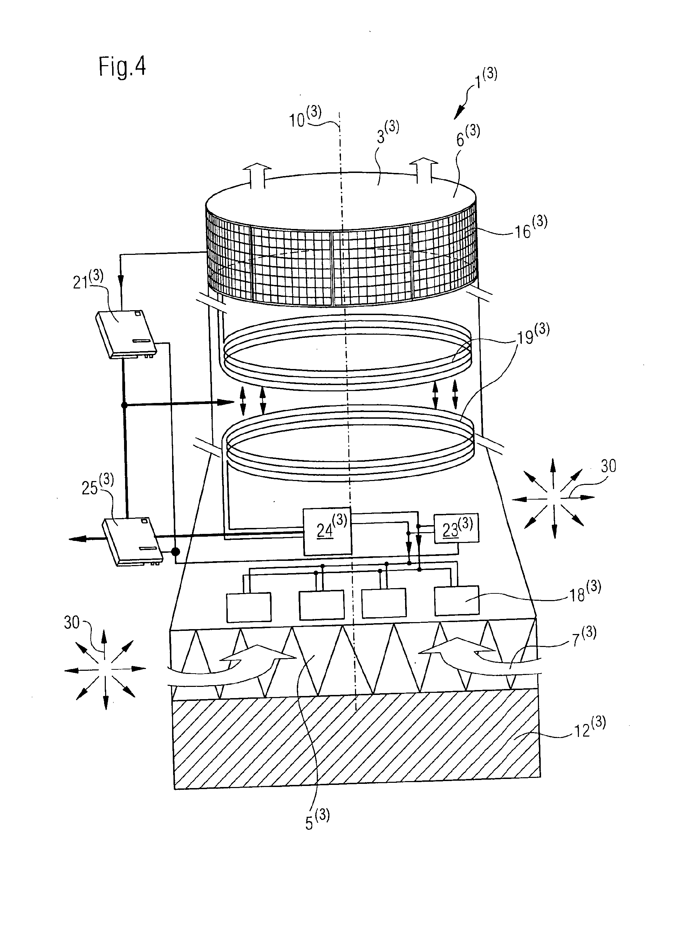

Das Kraftwerk 1(3) nach Fig. 4 umfasst mehrere Spulenelemente 19(3) als Komponente eines integrierten elektrischen Generators 20(3), wobei ein Spulenelement 19(3) über einen elektrischen Wandler 17(3) oder 24(3), also direkt oder indirekt, mit elektrischer Energie versorgt wird zur Bereitstellung eines elektromagnetischen Feldes. Ferner dargestellt sind mehrere separate, im unteren Bereich der Röhre 3(3) installierte Heizelemente 18(3), welche jeweils mit einer elektrischen Speicherzelle 22(3) elektrisch verbunden sind. Die mehreren Heizelemente 18(3) sind so angeordnet, dass sie Ihre Wärme oder Heizenergie an das vorbeiströmende Medium abgeben können. Die Bestromung der Heizelemente 18(3) kann wahlweise durch die Speicherzelle 22(3) und/oder durch einen elektrischen Wandler 24(3) erfolgen. Ein Wandler 25(3) für die Netzkopplung ist sowohl mit der Speicherzelle 22(3) als auch mit den elektrischen Wandlern 17(3), 24(3) elektrisch verbunden. Man erkennt ferner mehrere den Turmmantel 4(3) umspannende Photovoltaikmodule oder PV-Zellen 16(3). Das Kraftwerk 1(3) steht senkrecht auf einem Fundament oder auf massivem Grund 12(3) oder auf einer Anlagen-Plattform.

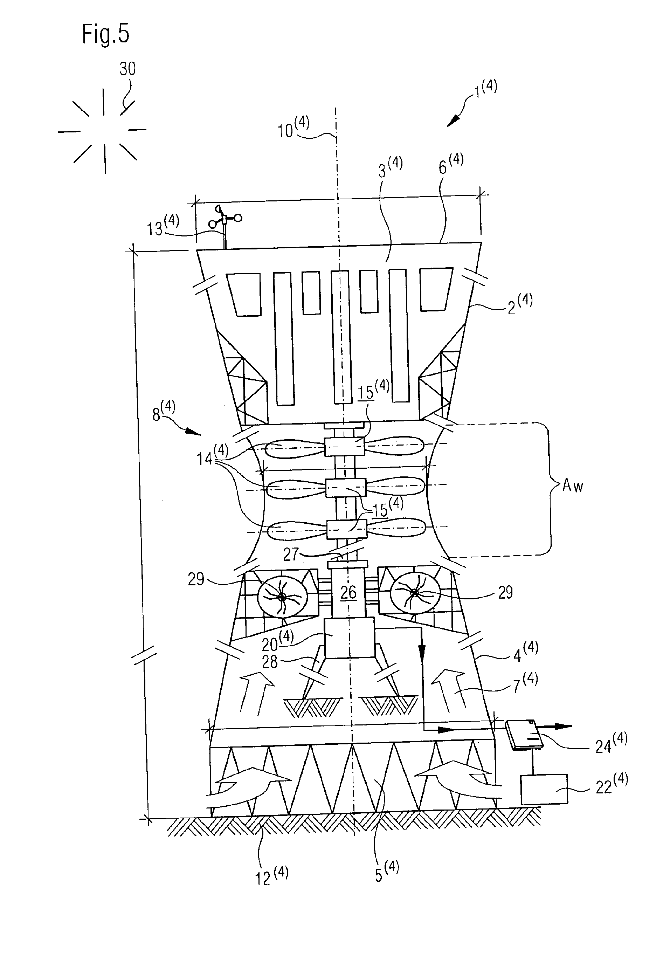

Das Kraftwerk 1(4) nach Fig. 5 hat ebenfalls die Gestalt eines eine Röhre 3(4) aufweisenden Turms 2(4) mit Öffnungen 5(4) 6(4) im oberen und unteren Drittel, sowie mit einem Mantel 4(4) mit verengtem Querschnitt $A_w$ im mittleren Bereich, während sich der Querschnitt nach oben und unten aufweitet. Dargestellt sind mehrere konzentrisch zur senkrechten Mittelachse 10(4) der Röhre 3(4) angeordnete Lagerbaugruppen 9(4), welche jeweils über Naben 15(4) mehrere Standard-Rotoren 8(4) mit jeweils mehreren Rotorblättern 14(4) lagern. Am unteren Ende dieser Rotoranordnung 8(4) ist eine Getriebebaugruppe 26 angeflanscht, welche die drehende Bewegung der mechanischen Welle 27 der Rotorbaugruppe 8(4) übersetzt und an die angrenzende elektrische Generatorbaugruppe 20(4) weiterleitet. Sowohl die Rotoranordnung 8(4) als auch die Getriebebaugruppe 26 sowie die Generatorbaugruppe 20(4) ist mittels mehrerer Maschinenträger 28 im Inneren der Röhre 3(4) installiert. Eine vertikale Medienströmung 7(4) versetzt die Rotoren 8(4) in Drehung. Die Generatorbaugruppe 20(4) ist mit einem elektrischen Wandler oder Umrichter 24(4) elektrisch verbunden oder gekoppelt, der wiederum elektrisch mit einer elektrischen Speicherzelle 22(4) verbunden ist als auch mit dem Wandler 25(4) für die Netzeinspeisung. Unterhalb der Turbinenanordnung 8(4) sind weitere Rotoren 29 mit schaufelartigen Blättern zu sehen, deren Rotationsachsen nicht in Richtung der senkrechten Mittelachse 10(4) orientiert sind, sondern horizontal, etwa tangential bezüglich dieser senkrechten Mittelachse 10(4). Auch jene zwei Rotoren 29 sind über die gemeinsame Getriebebaugruppe 26 mit dem elektrischen Generator 20(4) gekoppelt.

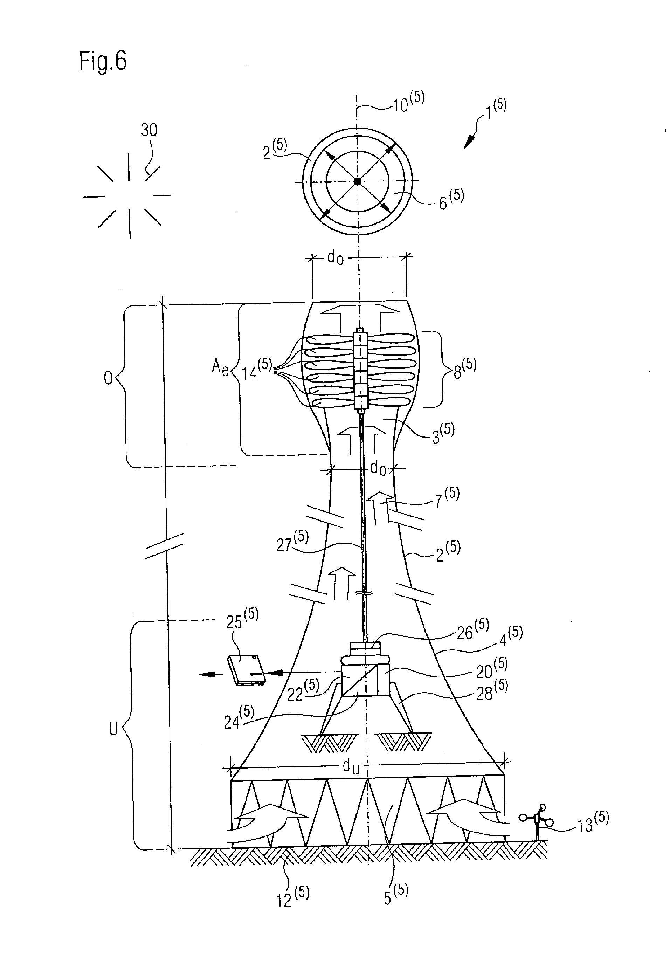

Das Kraftwerk 1(5) nach Fig. 6a und 6b verfügt ebenfalls über einen eine Röhre 3(5) umschließenden Turm 2(5) mit mehreren Öffnungen 5(5) im unteren Drittel des Turmes 2(5), jedoch nur einer großflächigen Öffnung 6(5) an der Oberseite des Turmes 2(5). Im oberen Drittel

des Turms $2^{(5)}$ ist der Querschnitt $A_e$ des Turms $2^{(5)}$ erweitert, während sich unterhalb dieses Bereiches direkt ein Bereich mit minimalem Turmdurchmesser $d_i$ anschließt, durch den das Medium mit seiner größten Strömungsgeschwindigkeit $v_i$ hindurchströmt. Dargestellt sind mehrere konzentrisch zu der senkrechten Mittelachse $10^{(5)}$ orientierte Lagerbaugruppen $9^{(5)}$ jeweils am oberen und unteren Ende einer Rotoranordnung $8^{(5)}$, welche jeweils über Naben $15^{(5)}$ mehrere Standard-Rotoren $8^{(5)}$ mit jeweils mehreren Rotorblätter $14^{(5)}$ lagern. Am unteren Ende dieser Rotoranordnung $8^{(5)}$ befindet sich eine Getriebebaugruppe $26^{(5)}$, welche die Drehbewegung der mechanischen Welle $27^{(5)}$ übersetzt und an die angrenzende elektrische Generatorbaugruppe $20^{(5)}$ weiterleitet. Die mechanische Welle $27^{(5)}$ erstreckt sich entlang und in Richtung der senkrechten Mittelachse $10^{(5)}$. Sowohl die Rotoranordnung $8^{(5)}$ als auch die Getriebebaugruppe $26^{(5)}$ sowie auch die Generatorbaugruppe $20^{(5)}$ wird von einem den Turm $2^{(5)}$ in dessen ganzen Länge $I_r$ innen durchziehenden Maschinenträger $28^{(5)}$ getragen. Die Generatorbaugruppe $20^{(5)}$ ist mit einem elektrischen Wandler oder Umrichter $24^{(5)}$ elektrisch gekoppelt, welcher wiederum elektrisch mit einer elektrischen Speicherzelle $22^{(5)}$ verbunden ist, sowie mit dem Wandler $25^{(5)}$ für die Netzeinspeisung.

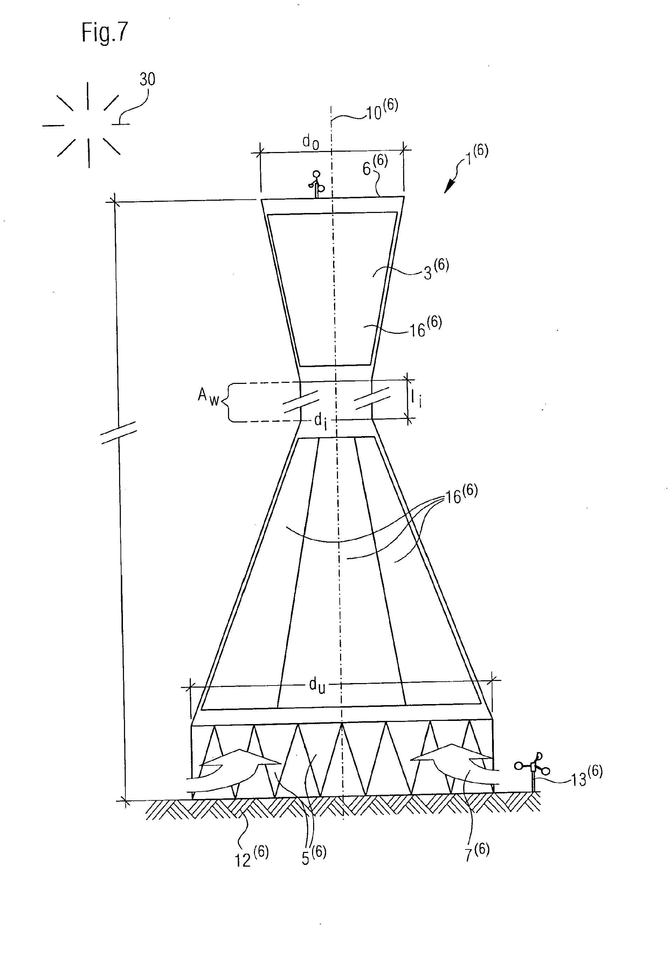

Das Kraftwerk $1^{(6)}$ nach Fig. 7 umfasst eine Röhre $3^{(6)}$ in stilisierter Sanduhrform, mit einer etwa im mittleren Bereich querschnittlich verengten Silhouette. Der Bereich minimalen Querschnitts erstreckt sich über eine Länge $I_i$ im oberen bzw. im mittleren Teil der Röhre $3^{(6)}$. Man erkennt Solarmodule $16^{(6)}$ und/oder Solarmodulfolienelemente und/oder Photovoltaikelemente oder PV-Zellen, welche den Mantel $4^{(6)}$ umfassend umspannen, um der Sonneneinstrahlung möglichst viel Fläche entgegenzusetzen und diese aufzufangen bzw. zu absorbieren.

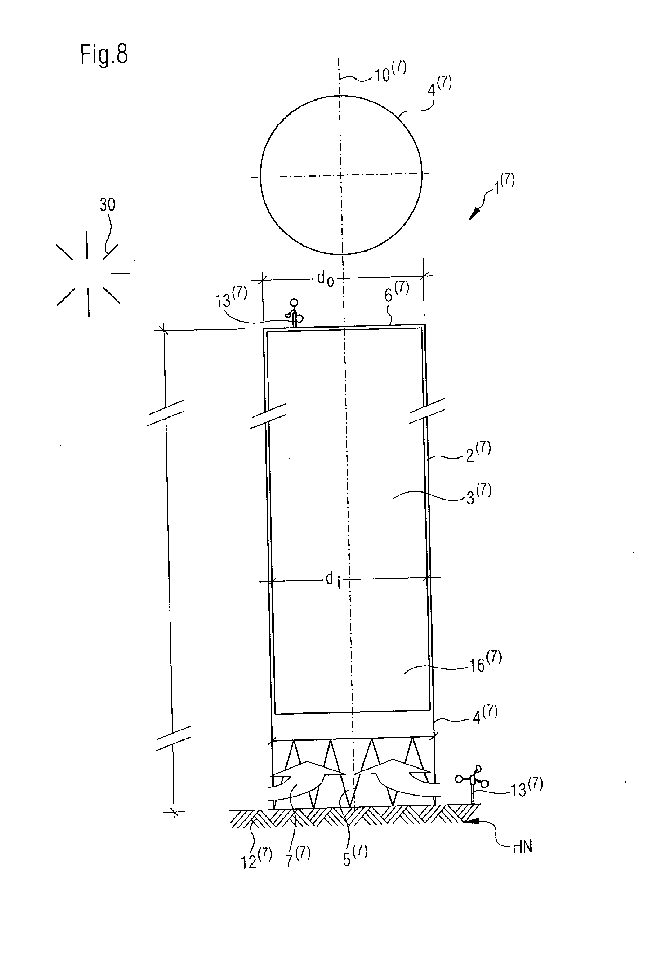

Das Kraftwerk $1^{(7)}$ nach Fig. 8a und 8b verfügt über eine Röhre $3^{(7)}$ mit einfachem, runden Querschnitt. Die Länge $I_r$ dieser Röhre $3^{(7)}$ ist weitaus größer als ihr Durchmesser $d_i$. Der Mantel $4^{(7)}$ ist mit Solarmodulen $16^{(7)}$ und/oder Solarmodulfolienelementen und/oder Photovoltaikelementen und/oder PV-Zellen belegt, welche den Mantel $4^{(7)}$ ringförmig umspannen. Die obere Hälfte der Zeichnung, Fig. 8b, zeigt die Draufsicht auf die Röhre $3^{(7)}$. Man erkennt eine große kreisförmige obere Öffnung $6^{(7)}$, durch welche das Strömungsmedium, insbesondere Luft, aus dem Inneren der Röhre $3^{(7)}$ in die Atmosphäre 30 entweichen kann. Am oberen Ende der Röhre $3^{(7)}$ ist eine Strömungs- und/oder Klimasensorik $13^{(7)}$, bspw. in Form eines anemometrischen Sensors, installiert, um die Windströmungen am oberen Teil der Röhre $3^{(7)}$ zu erfassen. Ebenso ist am unteren Ende der Röhre $3^{(7)\backslash}$ eine Strömungs- und/oder Klimasensorik $13^{(7)}$ vorgesehen, ebenfalls in Form eines anemometrischen Sensors, um die Windströmungen in Boden- bzw. Fundamentnähe zu erfassen.

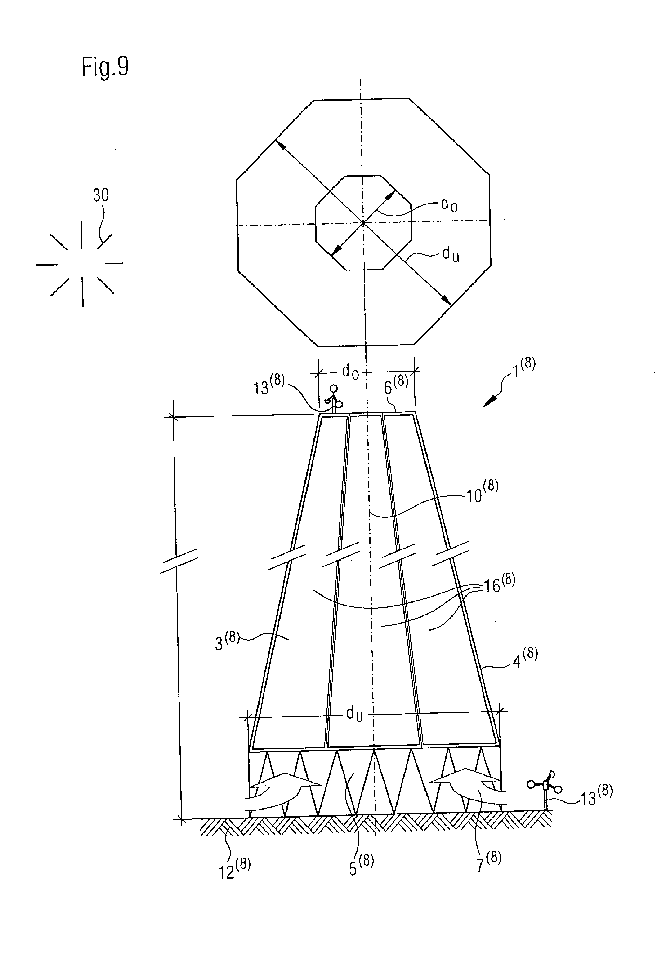

Das Kraftwerk $1^{(8)}$ nach Fig. 9a und 9b verfügt über einen Turm $2^{(8)}$ mit vieleckigem, insbesondere achteckigen Querschnitt. Die Länge $I_k$ dieser Röhre $3^{(8)}$ ist größer als jeder Durchmesser $d_o$, $d_u$ dieser Röhre $3^{(8)}$. Mehrere Solarmodule $16^{(8)}$ und/oder Solarmodulfolienelemente und/oder Photovoltaikelemente oder PV-Zellen umspannen den Mantel $4^{(8)}$ ringförmig, um die Sonneneinstrahlung aufzunehmen bzw. zu absorbieren. Die obere Hälfte der Zeichnung, Fig.9b, zeigt die Draufsicht auf den Turm $2^{(8)}$. Man erkennt eine vieleckige obere Öffnung $6^{(8)}$, durch welche das Strömungsmedium, insbesondere Luft, aus dem Inneren der Röhre $3^{(8)}$ in die Atmosphäre $30^{(8)}$ entweichen kann. Der Grund $12^{(8)}$ oder das Fundament, auf welchem der Turm $2^{(8)}$ errichtet ist, muss oberhalb derjenigen Höhenmarke HN liegen, welche bei Installation des Kraftwerks $1^{(8)}$ auf hoher See oder in fließenden Gewässern keinesfalls von den darunter befindlichen Wassermassen erreicht werden darf.

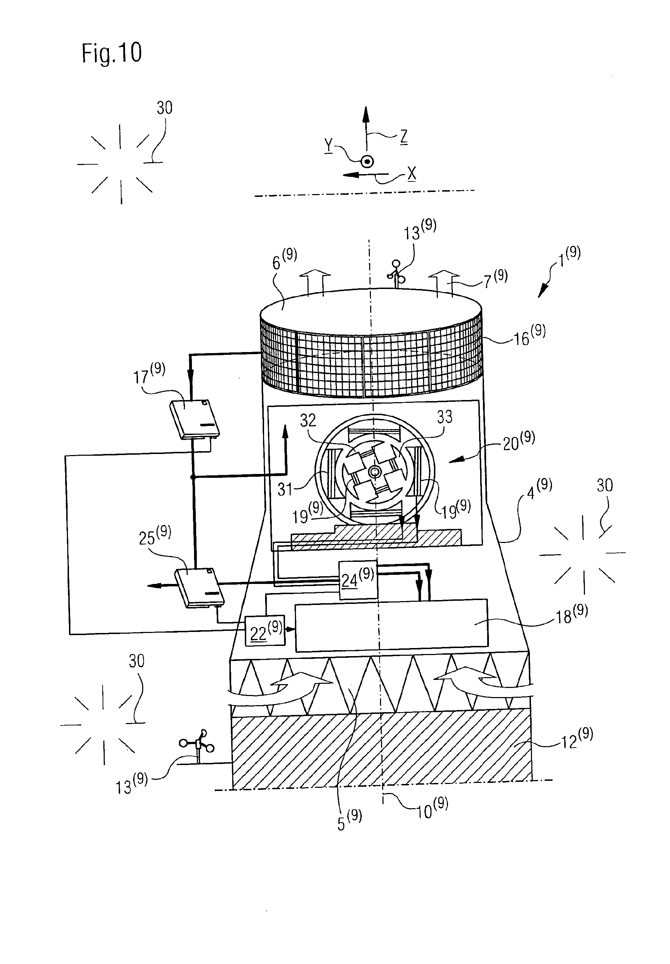

In dem Kraftwerk $1^{(9)}$ nach Fig. 10 befinden sich mehrere Spulenelemente $19^{(9)}$ als Komponente eines integrierten elektrischen Generators $20^{(9)}$. Diese Spulenelemente $19^{(9)}$ werden unterschieden in den elektromechanischen Statorteil 31 und den elektromechanische Rotorteil 32, wobei Letzterer dem Läufer 33 im Generator $20^{(9)}$ gleichkommt. Die Spulenelemente $19^{(9)}$ des Statorteils 31 werden über einen elektrischen Wandler oder Umrichter $17^{(9)}$ direkt mit elektrischer Energie versorgt, vorzugsweise zur Bereitstellung eines elektromagnetischen Feldes im Inneren des elektrischen Generators $20^{(9)}$. Der Abgriff der mittels Induktion im Inneren des Generators $20^{(9)}$ erzeugten elektrischen Spannung erfolgt über eine Kontaktierung, vorzugsweise am Läuferteil 33 des Generators $20^{(9)}$. Aus Gründen der Übersichtlichkeit nicht dargestellt ist dabei der Rotor $8^{(9)}$, der von der Medienströmung $7^{(9)}$ in rotatorische Bewegung versetzt wird, und der direkt oder indirekt mit dem Läufer 33 des Generators $20^{(9)}$ gekoppelt ist. Die elektrische Energie, die durch den Generator $20^{(9)}$ gewonnen wird, wird zu einem elektrischen Wandler oder Umrichter 22 übertragen. Generator $20^{(9)}$ und Wandler $24^{(9)}$ sind elektrisch gekoppelt, beispielsweise durch eine Leitungsverbindung. Ferner dargestellt ist ein separates, im unteren Bereich des Turms $2^{(9)}$ installiertes Heizelement $18^{(9)}$, das mit dem elektrischen Wandler $24^{(9)}$ als auch mit einer elektrischen Speicherzelle $22^{(9)}$ elektrisch verbunden ist. Die mehreren Heizelemente $18^{(9)}$ sind so angeordnet, dass sie Ihre Wärme oder Heizenergie an das vorbeiströmende Strömungsmedium abgeben können. Die Bestromung der Heizelemente $18^{(9)}$ kann wahlweise durch die Speicherzelle $22^{(9)}$ und/oder durch einen elektrischen Wandler oder Umrichter $24^{(9)}$ erfolgen. Der Netzeinspeisung dient ein Wandler $25^{(9)}$, der sowohl mit der Speicherzelle $22^{(9)}$ als auch mit den elektrischen Wandlern oder Umrichtern $17^{(9)}$, $24^{(9)}$ elektrisch verbunden ist. Es gibt mehrere, den Turmmantel $4^{(9)}$ umspannende Solarmodule $16^{(9)}$ oder PV-Zellen. Einer der elektrischen Wandler oder Umrichter $17^{(9)}$ ist mit diesen Photovoltaikmodulen $16^{(9)}$ oder PV-Zellen elektrisch verbunden oder gekoppelt. Die Bestromung der oben genannten Spulen $19^{(9)}$ erfolgt vorzugsweise durch die Energie, welche aus der Sonnenstrahlung gewonnen wird. Diese Sonnenstrahlung wird von den Photovoltaikmodulen 16[9] oder PV-Zellen absorbiert und in mindestens einem der elektrischen Wandler oder Umrichter 17[9] konditioniert. Das Kraftwerk 1[9] steht senkrecht auf einem Anlagenteil 12[9], oder auf einer Plattform eines Anlagenteils 12[9]. Es kann sich dabei um eine Plattform auf einem mobilen System handeln, beispielsweise auf einem Seefahrzeug oder auf einem Landfahrzeug.

**Patentansprüche**

1. Kraftwerk (1) zur Erzeugung von elektrischer Energie aus der Energie eines strömenden Mediums, umfassend ein vertikales, turmartiges Bauwerk (2) mit einer von unten nach oben durchgehenden Röhre (3), deren Mantel (4) zwischen wenigstens einer unterseitigen Einlassöffnung (5) und wenigstens einer oberseitigen Auslassöffnung (6) geschlossen ist, worin ein gasförmiges Medium, insbesondere Luft, in etwa vertikaler Richtung strömt und dabei einen oder mehrere, innerhalb der Röhre (3) angeordnete Rotoren (8) antreibt, so dass am Ausgang wenigstens eines daran gekoppelten Generators (20) ein elektrischer Strom abgegriffen werden kann, **dadurch gekennzeichnet, dass** am bodenseitigen Ende des turmartigen Bauwerks (2) kein vorgelagertes Treibhaus zur Erwärmung der Luft vorgesehen ist, sondern dass sich oberhalb der unterseitigen Einlassöffnungen (5) unmittelbar das turmartige Bauwerk (2) erhebt mit einer Steigung seiner Wand in dem Bereich oberhalb der Einlassöffnungen (5) von 45° oder mehr, vorzugsweise von 60° oder mehr, insbesondere von 75° oder mehr.

2. Kraftwerk (1) nach Anspruch 1, **dadurch gekennzeichnet, dass** zur Erwärmung der Luft am unteren Ende der Röhre (3) anstelle einer bodenseitigen Treibhausanordnung eine Anordnung vorgesehen ist, um im Bereich des Außenmantels (4) des turmartigen Bauwerks (2) vorhandene Energie, vorzugsweise Wärmeenergie, insbesondere aus der Sonneneinstrahlung, aufzufangen und in die Röhre (3) hinein zu leiten, insbesondere zu deren unterem Ende, um dort die Wärme an das gasförmige Medium, insbesondere an die dortige Luft, abzugeben.

3. Kraftwerk (1) nach Anspruch 2, **dadurch gekennzeichnet, dass** an der Außenseite des turmartigen Bauwerks (2) ein oder mehrere Solarmodule (16), Photovoltaikmodule, Photozellen oder Solarkollektoren angeordnet sind.

4. Kraftwerk (1) nach Anspruch 3, **dadurch gekennzeichnet, dass** innerhalb des turmartigen Bauwerks (2) ein oder mehrere Wärmequellen (18) oder Heizelemente angeordnet sind.

5. Kraftwerk (1) nach Anspruch 4, **dadurch gekennzeichnet, dass** die Wärmeabgabe von den Wärmequellen (18) oder Heizelementen an das gasförmige Medium, insbesondere an die Luft, regelbar ist.

6. Kraftwerk (1) nach Anspruch 5, **dadurch gekennzeichnet, dass** als Sollwert für die Regelung die Strömungsgeschwindigkeit innerhalb des turmartigen Bauwerks (2) vorgebbar ist.

7. Kraftwerk (1) nach Anspruch 6, **dadurch gekennzeichnet, dass** zur Erfassung oder Berechnung der tatsächlichen Strömungsgeschwindigkeit innerhalb des turmartigen Bauwerks (2) ein oder mehrere Sensoren (13) vorgesehen sind, beispielsweise Windsensoren, Drucksensoren, Thermometer und/oder Hygrometer.

8. Kraftwerk (1) nach Anspruch 7, **dadurch gekennzeichnet, dass** an jeder unterseitigen Einlassöffnung (5) und an jeder oberseitigen Auslassöffnung (6) wenigstens je ein Sensor (13) vorgesehen ist, insbesondere je ein Windsensor, Drucksensor, Thermometer und/oder Hygrometer.

9. Kraftwerk (1) nach einem der vorhergehenden Ansprüche, **dadurch gekennzeichnet, dass** ein oder mehrere Rotoren (8) jeweils zwei oder mehrere Rotorblätter (14) aufweisen.

10. Kraftwerk (1) nach Anspruch 9, **dadurch gekennzeichnet, dass** der Anstellwinkel wenigstens eines Rotorblattes (14) verstellbar ist, insbesondere mittels eines Schwenktriebs.

11. Kraftwerk (1) nach Anspruch 10, **gekennzeichnet durch** eine Steuerung oder Regelung zur Einstellung des Anstellwinkels wenigstens eines Rotorblattes (14).

12. Kraftwerk (1) nach Anspruch 11, **dadurch gekennzeichnet, dass** die Regelung des Anstellwinkels gemäß der aktuellen Strömungsgeschwindigkeit innerhalb des turmartigen Bauwerks (2) erfolgt.

13. Kraftwerk (1) nach einem der vorhergehenden Ansprüche, **dadurch gekennzeichnet, dass** in den Antriebsstrang zwischen einem Rotor (8) und einem Generator (20) ein Getriebe (26) eingeschaltet ist.

14. Kraftwerk (1) nach einem der vorhergehenden Ansprüche, **dadurch gekennzeichnet, dass** am Ausgang eines Generators (20) ein Wandler (24,25), insbesondere ein Wechsel- oder Umrichter, angekoppelt ist, so dass die erzeugte Energie in ein Netz einspeisbar ist.

15. Kraftwerk (1) nach einem der vorhergehenden Ansprüche, **dadurch gekennzeichnet, dass** im Bereich oberseitiger Auslassöffnungen (6) der vertikalen Röhre (3) innerhalb des turmartigen Bauwerks (2) eion oder mehrere Strömungsleitbleche vorhanden sind, um den Zug innerhalb der Röhre (3) zu verbessern

Fig.1

EP 2 706 227 A2

Fig.2

13

# Fig.3

## Fig.4

Fig.5

Fig.6

## Fig.7

Fig.8

Fig.9

$d_0$

$d_u$

30

$13^{(8)}$

$d_0$

$6^{(8)}$

$1^{(8)}$

$10^{(8)}$

$16^{(8)}$

$3^{(8)}$

$4^{(8)}$

$d_u$

$13^{(8)}$

$12^{(8)}$

$5^{(8)}$

$7^{(8)}$

Fig.10

EP 2 706 227 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4114501 A1